(19) Europäisches Patentamt
European Patent Office
Office européen des brevets

(11) **EP 2 345 184 B1**

(12) **EUROPÄISCHE PATENTSCHRIFT**

(45) Veröffentlichungstag und Bekanntmachung des Hinweises auf die Patenterteilung:
**20.04.2016 Patentblatt 2016/16**

(21) Anmeldenummer: **09783109.3**

(22) Anmeldetag: **17.09.2009**

(51) Int Cl.:
*H04B 17/309* (2015.01)    *H04B 17/345* (2015.01)
*H04B 5/00* (2006.01)

(86) Internationale Anmeldenummer:
**PCT/EP2009/062042**

(87) Internationale Veröffentlichungsnummer:
**WO 2010/031807 (25.03.2010 Gazette 2010/12)**

(54) **TESTVORRICHTUNG UND VERFAHREN ZUR DURCHFÜHRUNG EINES FUNKTIONSTESTS EINES KOMMUNIKATIONSSYSTEMS**

TEST DEVICE AND METHOD FOR CARRYING OUT A FUNCTIONAL TEST OF A COMMUNICATION SYSTEM

DISPOSITIF D'ESSAI ET PROCÉDÉ POUR RÉALISER UN ESSAI FONCTIONNEL D'UN SYSTÈME DE COMMUNICATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.09.2008   DE 102008042208**
**18.09.2008   US 98054 P**

(43) Veröffentlichungstag der Anmeldung:
**20.07.2011   Patentblatt 2011/29**

(73) Patentinhaber: **Airbus Operations GmbH**
**21129 Hamburg (DE)**

(72) Erfinder:
• **SCHIRRMACHER, Martin**
**21614 Buxtehude (DE)**
• **SCHWARK, Uwe**
**28832 Achim (DE)**
• **DONNIG, Uwe**
**27478 Cuxhaven (DE)**

(74) Vertreter: **Isarpatent**
**Patent- und Rechtsanwälte Behnisch Barth Charles**
**Hassa Peckmann & Partner mbB**
**Postfach 44 01 51**
**80750 München (DE)**

(56) Entgegenhaltungen:
**DE-A1-102005 032 141     DE-A1-102006 036 082**
**US-B1- 6 553 098**

**Beschreibung**

Die vorliegende Erfindung bezieht sich auf eine Testvorrichtung und ein Verfahren zur Durchführung eines Funktionstests eines Kommunikationssystems, insbesondere in einer Flugzeugkabine eines Flugzeuges, insbesondere im Luft- und Raumfahrtbereich.

Obwohl auf beliebige Bereiche anwendbar, wird die vorliegende Erfindung in Bezug mit einem Flugzeug oder mit einem Passagierflugzeug näher erläutert.

Kommunikationssysteme in Flugzeugkabinen stellen Kommunikationsdienste oder Dienste, wie GSM, UMTS, WLAN oder dergleichen, für die Besatzung des Flugzeuges oder für Passagiere bereit.

Zur Abstrahlung des jeweiligen Dienstsignals für den entsprechenden Dienst kann eine Leckleitungsantenne (Leaky Line Antenne) eingesetzt werden, die längsseitig in der Flugzeugkabine angeordnet ist. Zur Prüfung der ordnungsgemäßen Installation und Funktion des Kommunikationssystems, insbesondere zur Sicherstellung der Hochfrequenz(HF)-Signalverteilung innerhalb der Flugzeugkabine, wird eine Abdeckungs-Messung (Funkversorgungsmessung) in jedem Frequenzband der entsprechenden Dienste mittels eines HF-Spektrumanalysators und einer Messantenne an mehreren unterschiedlichen Orten in der Flugzeugkabine durchgeführt. Dabei können die Messergebnisse je nach Zustand und Konfiguration der Flugzeugkabine und Wahl des Messortes stark variieren. Aus diesem Grund müssen die Messergebnisse in geeigneter Weise gemittelt und mit den jeweiligen Antennenfaktoren der verwendeten Messantennen korrigiert werden.

Eine ungenau oder fehlerhaft durchgeführte Messung kann unter Umständen zur Unterschreitung vorbestimmter, insbesondere behördlicher Grenzwerte führen, obgleich die behördlichen Grenzwerte tatsächlich überschritten werden. Weiter ist es möglich, dass eine Fehlermeldung ausgelöst wird, obwohl tatsächlich kein Fehler vorliegt.

Bei der herkömmlichen Messung mittels HF-Spektrumanalysator und eigens vorgesehener Messantenne müssen die jeweiligen Messungen nachteiligerweise manuell durchgeführt werden und erfordern somit einen hohen Zeit- und Kostenaufwand. Für die Durchführung und Auswertung der herkömmlichen Messungen ist ferner nachteiligerweise eigens geschultes Personal notwendig. Dieses geschulte Personal muss insbesondere Erfahrung mit HF-Messungen haben. Ferner erfordern die herkömmlichen Messungen spezielle Hardware, beispielsweise den HF-Spektrumanalysator und die Messantenne.

Um den Test an jeden beliebigen Ort in der Flugzeugkabine durchführen zu können, werden herkömmlicherweise HF-Testsignale verwendet, die einen Leistungspegel aufweisen, die einer behördlichen Genehmigung bedürfen. Diese behördliche Genehmigung ist herkömmlicherweise notwendig, da die herkömmlichen HF-Testsignale mit den verwendeten Leistungspegeln auch außerhalb des Flugzeugs noch messbar sind und potentiell Störungen anderer Dienste verursachen können.

Das Dokument DE-A-2005 032 141 beschreibt eine Testvorrichtung in einer Flugzeugkabine. Die Dokumente DE-A-10 2006 036 082 und US-B1-6 553 098 offenbaren die Einspeisung von breitbandigem Rauschen in eine Leckleitungsantenne.

Demnach ist es eine Aufgabe der vorliegenden Erfindung, einen automatisierten Funktionstest eines Kommunikationssystems, insbesondere in einer Flugzeugkabine eines Flugzeuges, zu schaffen.

Weiter ist es eine Aufgabe, einen automatisierten Funktionstest eines Kommunikationssystems zu schaffen, welcher keiner behördlichen Genehmigung bedarf.

Erfindungsgemäß wird diese Aufgabe durch eine Testvorrichtung mit den Merkmalen des Patentanspruchs 1 und durch ein Verfahren mit den Merkmalen des Patentanspruchs 16 gelöst.

Demgemäß wird eine Testvorrichtung zur Durchführung eines Funktionstests eines Kommunikationssystems, insbesondere in einer Flugzeugkabine eines Flugzeuges, vorgeschlagen, welche aufweist:

- eine Übertragungsstrecke, welche zumindest eine in der Flugzeugkabine angeordnete Leckleitungsantenne aufweist;
- eine mit der Übertragungsstrecke gekoppelten Steuervorrichtung, welche eine Generierungseinrichtung zum Generieren eines breitbandigen Rauschsignals und eine Übertragungseinrichtung zum Einspeisen eines HF-Signals auf die Leckleitungsantenne aufweist, wobei das eingespeiste HF-Signal einen vorbestimmten Leistungspegel hat und zumindest das generierte breitbandige Rauschsignal enthält;
- zumindest eine an einer vorbestimmten Koppelstelle mit der Übertragungsstrecke gekoppelte Messeinrichtung zum Messen des Leistungspegels des HF-Signals an der Koppelstelle und zum Bereitstellen eines zu dem gemessenen Leistungspegel proportionalen Messsignals; und
- ein Auswertemittel zum Bereitstellen eines Testergebnisses mittels eines Vergleiches zwischen dem bereitgestellten Messsignal und einem von dem Leistungspegel des eingespeisten HF-Signals abhängigen Sollsignal.

Weiter wird ein Verfahren zum Durchführen eines Funktionstests eines Kommunikationssystems, insbesondere in einer Flugzeugkabine eines Flugzeuges, vorgeschlagen, welches folgende Schritte hat:

- Generieren eines breitbandigen Rauschsignales;
- Einspeisen eines HF-Signals in eine Übertragungsstrecke, welche zumindest eine in der Flugzeugkabine angeordnete Leckleitungsantenne aufweist, wobei das eingespeiste HF-Signal einen vorbestimmten oder eingestellten Leistungspegel hat und zumindest das generierte breitbandige Rauschsignal enthält;
- Messen des Leistungspegels an einer vorbestimmbaren Koppelstelle der Übertragungsstrecke;
- Bereitstellen eines zu dem gemessenen Leistungspegels proportionalen Messsignals; und
- Bereitstellen eines Testergebnisses mittels eines Vergleichs zwischen dem bereitgestellten Messsignal und einem von dem Leistungspegel des eingespeisten HF-Signals abhängigen Sollsignals.

Ein Vorteil der vorliegenden Erfindung liegt darin, dass der erfindungsgemäße Funktionstest des Kommunikationssystems ohne zusätzliche spezielle HF-Messgeräte, wie HF-Spektrumanalysator, und ohne den Einsatz eines speziell geschulten Personals durchgeführt werden kann, da alle notwendigen Komponenten der Testvorrichtung in das Kommunikationssystem integriert werden können.

Weiter kann durch die erfindungsgemäße Testvorrichtung der Funktionstest des Kommunikationssystems schon mittels eines einzigen Knopfdruckes, der die Testvorrichtung triggert, ausgelöst werden und kann vollautomatisiert erfolgen. Dem Nutzer kann am Ende des Funktionstestes eine Signalisierung in Abhängigkeit des Testergebnisses bereitgestellt werden. Das Testergebnis kann beispielsweise eine Fehlermeldung oder einen Fehlercode umfassen.

Ein weiterer Vorteil der vorliegenden Erfindung liegt darin, dass die herkömmliche manuelle Messung in der Flugzeugkabine entfallen kann und weiter die herkömmliche Nachbearbeitung der Messdaten entfallen kann.

Insbesondere durch die geleitete Messung mittels der Leckleitungsantenne und der Messeinrichtung an der vorbestimmten Koppelstelle, beispielsweise am Ende der Übertragungsstrecke, sind die erfindungsgemäßen Testergebnisse weniger schwankungsbehaftet als die herkömmlichen Testergebnisse und somit besser reproduzierbar und folglich sicherer. Durch die erfindungsgemäße Testvorrichtung bzw. durch das erfindungsgemäße Verfahren zur Durchführung des Funktionstests können Fehler bei der Installation, wie vergessene Verbindungen oder Anschlüsse, Leitungsbrüche oder Beschädigungen der Leckleitungsantenne eindeutig und schnell identifiziert werden.

Weiter ermöglicht die durch die Leckleitungsantenne geleitete Messung in Kombination mit dem Einsatz der Messeinrichtung an zumindest einer vorbestimmten Koppelstelle der Übertragungsstrecke eine Absenkung des Leistungspegels des für den Funktionstest benötigten HF-Signals auf ein Leistungspegelniveau, welches die Beantragung von Frequenzzuteilungen für die verwendeten Testfrequenzen und damit eine behördliche Genehmigung überflüssig macht. Somit kann der erfindungsgemäße Funktionstest an jedem beliebigen Ort der Welt durchgeführt werden und erfordert dabei keine behördliche Genehmigung der zuständigen nationalen Behörde.

Weiter ist die erfindungsgemäße Testvorrichtung dazu eingerichtet, die Funktion und Leistungsfähigkeit des Kommunikationssystems insbesondere mit einer höheren Testtiefe und während des Betriebes des Kommunikationssystems zu überwachen und gegebenenfalls nachzuregeln. Beispielsweise können dabei die Leistungspegel der über die Leckleitungsantenne zu übertragenden Signale nachgeregelt werden.

In den Unteransprüchen finden sich vorteilhafte Ausgestaltungen und Verbesserungen der Erfindung.

Gemäß einer bevorzugten Ausgestaltung der Erfindung ist das bereitgestellte Rauschsignal breitbandig gegenüber einer Kohärenzbandbreite der Übertragungsstrecke.

Im Sinne der vorliegenden Anmeldung ist die Kohärenzbandbreite Wc definiert über die Frequenz-Zeit-Autokorrelationsfunktion $\varphi$FT ($\Delta$f, $\Delta$t = 0) der Kanalübertragungsfunktion:

$$|\varphi\text{FT } (\Delta f = W_c, \Delta t = 0)| = 1/2 \ |\varphi\text{FT } (\Delta f = 0, \Delta t = 0)|$$

Die Kohärenzbandbreite Wc ist der Wert, bei dem der Wert der Frequenz-Zeit-Autokorrelationsfunktion mit wachsendem $\Delta$f das erste Mal auf die Hälfte abgesunken ist. Somit ist diese ein Maß für die Frequenzdifferenz $\Delta$f, um die sich zwei Sinussignale unterscheiden müssen, damit sie bei der Übertragung vollständig unterschiedliche Kanalübertragungseigenschaften vorfinden. Ist die Signalbandbreite W kleiner als die Kohärenzbandbreite Wc, so finden alle spektralen Signalanteile im Wesentlichen gleiche Übertragungseigenschaften vor. Folglich bezeichnet die Kohärenbandbreite Wc näherungsweise das maximale Frequenzintervall, über das zwei Frequenzkomponenten eines Signals einen vergleichbaren oder korrelierten Amplitudenschwund erfahren.

Wenn die durch die Mehrwegausbreitung auf dem Funkkanal bedingte zeitliche Spreizung des Signals, die Mehrwegeverbreiterung (Time Delay Spread), D Sekunden beträgt, dann gilt näherungsweise für die Kohärenzbandbreite Wc in Hz:

$$W_c \approx 1 \ / \ (2 * Pi * D).$$

Weiter ist die Steuervorrichtung insbesondere als ein Computerprogrogrammproduukt ausgebildet, welches vorzugsweise Teil der Netzwerk-Steuereinrichtung (Network Control Unit; NCU) der Flugzeugkabine ist.

Das Computerprogrammprodukt ist vorzugsweise dazu eingerichtet, auf einer programmgesteuerten Einrichtung, wie der Netzwerk-Steuereinrichtung, die Durchführung von Schritten zur Ausbildung der Funktion der Steuervorrichtung zu veranlassen.

Ein Computerprogramm-Produkt wie ein Computerprogramm-Mittel kann beispielsweise als Speichermedium, wie Speicherkarte, USB-Stick, Floppy, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Gemäß einer weiteren bevorzugten Ausgestaltung beinhaltet das bereitgestellte breitbandige Rauschsignal zumindest ein Maskierungssignal. Das jeweilige Maskierungssignal ist insbesondere zum Maskieren eines jeweiligen terrestrischen Basisstationssignals, welches ein jeweiliges vorbestimmtes Frequenzband nutzt, geeignet.

Gemäß einer bevorzugten Weiterbildung der Erfindung hat die Messeinrichtung eine HF-Terminierung.

Gemäß einer weiteren bevorzugten Weiterbildung hat die Messeinrichtung einen Abschluss-Widerstand zur HF-Terminierung. Alternativ ist die Messeinrichtung mit einem Abschluss-Widerstand zur HF-Terminierung gekoppelt.

Insbesondere hat die Übertragungsstrecke ein erstes Ende und ein zweites Ende. Die Leckleitungsantenne ist vorzugsweise zwischen dem ersten Ende und dem zweiten Ende gekoppelt. Ferner ist die Steuervorrichtung vorzugsweise mit dem ersten Ende gekoppelt. Weiter ist das Auswertemittel vorzugsweise mit dem ersten Ende oder dem zweiten Ende gekoppelt.

Gemäß einer weiteren bevorzugten Ausgestaltung weist die Generierungseinrichtung eine Anzahl von Rauschgeneratoren auf. Der jeweilige Rauschgenerator ist vorzugsweise dazu geeignet, ein jeweiliges auf ein vorbestimmtes Frequenzband begrenztes Rauschsignal bereitzustellen.

Gemäß einer weiteren bevorzugten Ausgestaltung weist die Steuereinrichtung ein Auswahlmittel auf. Das Auswahlmittel ist vorzugsweise dazu geeignet, zumindest einen der Anzahl der Rauschgeneratoren zum Bereitstellen eines bandbegrenzten Rauschsignals für das HF-Signal auszuwählen.

Vorzugsweise ist das jeweilige Frequenzband des bandbegrenzten Rauschsignals auf ein entsprechendes vorbestimmtes Frequenzband einer jeweiligen terrestrischen Basisstation eingestellt.

Gemäß einer weiteren bevorzugten Weiterbildung hat die Steuervorrichtung ein Triggermittel. Das Triggermittel ist vorzugsweise dazu eingerichtet, die Durchführung des Funktionstests mit dem ausgewählten bandbegrenzten Rauschsignal zu triggern.

Das Triggermittel ist insbesondere weiter dazu eingerichtet, eine Mehrzahl der Funktionstests mit unterschiedlichen, ausgewählten bandbegrenzten Rauschsignalen seriell auszuführen.

Vorzugsweise ist das Auswertemittel dazu eingerichtet, einen Testergebnis-Vektor in Abhängigkeit der Mehrzahl der seriell durchgeführten Funktionstests des Kommunikationssystems bereitzustellen.

Beispielsweise ist die Leckleitungsantenne als eine Koaxialleitung mit einer Mehrzahl von Perforierungen ausgebildet. Die Mehrzahl von Perforierungen kann auch Schlitze und/oder Löcher umfassen.

Das Messsignal ist beispielsweise als ein Gleichspannungssignal, als ein Stromsignal oder als ein Frequenzsignal ausgebildet.

Gemäß einer weiteren bevorzugten Weiterbildung hat die Messeinrichtung einen HF-Detektor. Der HF-Detektor ist vorzugsweise dazu geeignet, den Leistungspegel des HF-Signals an der Koppelstelle in ein proportionales Gleichspannungssignal, in ein Stromsignal oder ein Frequenzsignal zu wandeln.

Gemäß einer weiteren bevorzugten Ausgestaltung weist die Übertragungsstrecke eine längsseitig in der Flugzeugkabine angeordnete Sende-Leckleitungsantenne und eine längsseitig in der Flugzeugkabine angeordnete Empfangs-Leckleitungsantenne auf.

Beispielsweise sind die Sende-Leckleitungsantenne und die Empfangs-Leckleitungsantenne parallel in der Flugzeugkabine angeordnet und jeweils zwischen dem ersten Ende und dem zweiten Ende der Übertragungsstrecke gekoppelt.

Gemäß einer weiteren bevorzugten Weiterbildung ist eine Mehrzahl von Messeinrichtungen vorgesehen, wobei eine erste Messeinrichtung an dem zweiten Ende der Übertragungsstrecke mit der Sende-Leckleitungsantenne gekoppelt ist und eine zweite Messeinrichtung an dem ersten Ende der Übertragungsstrecke mit dem Empfangs-Leckleitungsantenne gekoppelt ist.

Gemäß einer weiteren bevorzugten Weiterbildung ist zumindest eine Sende-/Empfangseinrichtung vorgesehen. Die jeweilige Sende-/Empfangseinrichtung ist vorzugsweise dazu geeignet, ein Dienstsignal zur Bereitstellung eines vorbestimmten Dienstes und zur Übertragung über die Übertragungsstrecke bereitzustellen.

Vorzugsweise integriert die Sende-/Empfangseinrichtung die zweite Messeinrichtung.

Gemäß einer weiteren bevorzugten Weiterbildung ist eine Kombinier-Einrichtung vorgesehen, welche dazu eingerichtet ist, das bereitgestellte breitbandige Rauschsignal und das zumindest eine Dienstsignal zur Ausbildung des auf die Übertragungsstrecke einzuspeisenden HF-Signals zu kombinieren.

Gemäß einer weiteren bevorzugten Weiterbildung ist eine Kombinier-Einrichtung vorgesehen, welche dazu eingerichtet ist, die von den Rauschgeneratoren bereitgestellten bandbegrenzten Rauschsignale und das zumindest eine Dienstsignal zur Ausbildung des auf die Übertragungsstrecke einzuspeisenden HF-Signals zu kombinieren.

Gemäß einer weiteren bevorzugten Weiterbildung ist ein Fehlerdetektionsmittel vorgesehen, welches dazu geeignet ist, einen Fehler eines oder mehrerer Rauschgeneratoren und/oder einen Fehler auf der Übertragungsstrecke in Abhängigkeit des bereitgestellten Testergebnis-Vektors zu detektieren.

Vorzugsweise beinhaltet die Steuervorrichtung oder die Messeinrichtung das Auswertemittel und/oder das Fehlerdetektionsmittel.

Gemäß einer weiteren bevorzugten Ausgestaltung ist die Testvorrichtung dazu eingerichtet, das Kommunikationssystem während des Betriebes des Kommunikationssystems zu testen.

Die Erfindung wird im Folgenden anhand von Ausführungsbeispielen unter Bezugnahme auf die beiliegenden Figuren näher erläutert.

Von den Figuren zeigen:

Fig. 1     ein schematisches Blockschaltbild eines ersten Ausführungsbeispiels der Testvorrichtung gemäß der Erfindung;

Fig. 2     ein schematisches Blockschaltbild eines zweiten Ausführungsbeispiels der Testvorrichtung gemäß der Erfindung;

Fig. 3     ein schematisches Amplituden-Frequenz-Diagramm mit einem ersten Ausführungsbeispiel eines HF-Signals gemäß der Erfindung und drei terrestrischen Basisstations-Signalen;

Fig. 4     ein schematisches Amplituden-Frequenz-Diagramm mit einem zweiten Ausführungsbeispiel des HF-Signals gemäß der Erfindung und drei terrestrischen Basisstations-Signalen;

Fig. 5     ein schematisches Blockschaltbild eines Ausführungsbeispiels der Generierungseinrichtung nach Fig. 1;

Fig. 6     ein schematisches Amplituden-Frequenz-Diagramm eines Ausführungsbeispiels mit drei gemäß Fig. 5 generierten Maskierungssignalen;

Fig. 7     ein schematisches Amplituden-Frequenz-Diagramm eines Ausführungsbeispiels mit einem gemäß Fig. 5 generierten bandbegrenzten Rauschsignal und drei terrestrischen Basisstations-Signalen;

Fig. 8     ein schematisches Blockschaltbild eines dritten Ausführungsbeispiels der Testvorrichtung gemäß der Erfindung;

Fig. 9     ein schematisches Blockschaltbild eines Ausführungsbeispiels einer Generierungseinrichtung und einer Übertragungseinrichtung nach Fig. 1; und

Fig. 10    ein schematisches Ablaufdiagramm eines Ausführungsbeispiels eines Verfahrens zum Durchführen eines Funktionstestes eines Kommunikationssystems.

In den Figuren bezeichnen dieselben Bezugszeichen gleiche oder funktionsgleiche Komponenten - sofern nichts Gegenteiliges angegeben ist.

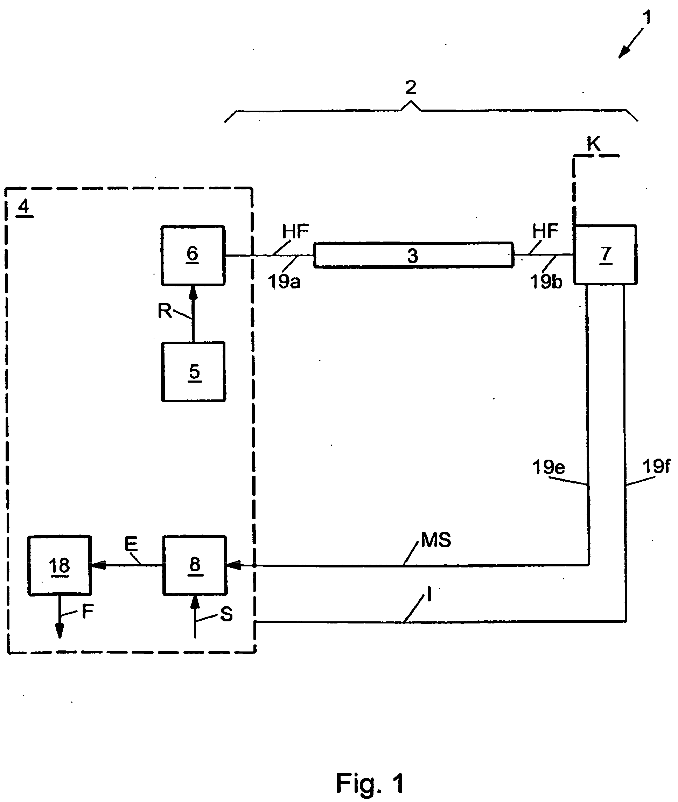

Fig. 1 zeigt ein schematisches Blockschaltbild eines ersten Ausführungsbeispiels einer Testvorrichtung 1 zur Durchführung eines Funktionstestes eines Kommunikationssystems in einer Flugzeugkabine eines Flugzeuges.

Die Testvorrichtung 1 weist eine Übertragungsstrecke 2, eine mit der Übertragungsstrecke 2 gekoppelte Steuervorrichtung 4, zumindest eine an einer vorbestimmten Koppelstelle K mit der Übertragungsstrecke 2 gekoppelte Messeinrichtung 7 und ein Auswertemittel 8 auf.

Die Übertragungsstrecke 2 weist zumindest eine in der Flugzeugkabine angeordnete Leckleitungsantenne 3 auf. Die Leckleitungsantenne 3 ist beispielsweise als eine Koaxialleitung mit einer Mehrzahl von Perforierungen ausgebildet.

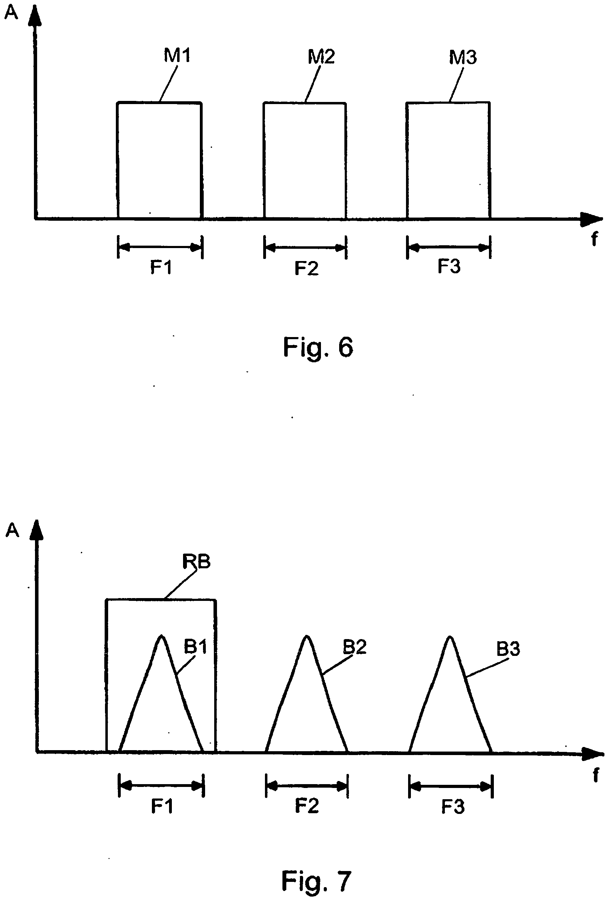

Die Steuervorrichtung 4 ist beispielsweise mittels einer Leitung 19a mit der Leckleitungsantenne 3 gekoppelt. Die Steuervorrichtung 4 hat eine Generierungseinrichtung 5 zum Generieren eines breitbandigen Rauschsignals R und eine Übertragungseinrichtung 6 zum Einspeisen eines HF-Signals HF auf die Leckleitungsantenne 3. Das eingespeiste HF-Signal HF hat einen eingestellten oder vorbestimmten Leistungspegel und enthält zumindest das generierte breitbandige Rauschsignal R. Das von der Generierungseinrichtung 5 bereitgestellte Rauschsignal R ist breitbandig gegenüber einer Kohärenzbandbreite der Übertragungsstrecke 2. Weiter beinhaltet das bereitgestellte breitbandige Rauschsignal R vorzugsweise zumindest ein Maskierungssignal M1-M3. Das jeweilige Maskierungssignal M1-M3 ist zum Maskieren eines jeweiligen terrestrischen Basisstations-Signals B1-B3, welches ein jeweiliges vorbestimmtes Frequenzband F1-F3 nutzt, geeignet (vgl. Fig. 6).

Die Messeinrichtung 7 ist zur Messung des Leistungspegels des HF-Signals HF an der vorbestimmten Koppelstelle K geeignet, um ein zu dem gemessenen Leistungspegel proportionales Messsignal MS bereitzustellen. Die Messeinrichtung 7 ist beispielsweise mittels einer Leitung 19b mit der Leckleitungsantenne 3 gekoppelt. Weiter wird die Messeinrichtung 7 von der Steuervorrichtung 4 mittels einer Leitung 19e mit Strom I versorgt. Ferner überträgt die Messeinrichtung 7 das Messsignal MS mittels einer Leitung 19f an das Auswertemittel 8.

Die Messeinrichtung 7 hat eine HF-Terminierung. Zur HF-Terminierung weist die Messeinrichtung 7 beispielsweise einen Abschlusswiderstand 9 auf. Alternativ kann die Messeinrichtung 7 mit einem Abschlusswiderstand 9 gekoppelt sein. Das Messsignal MS ist beispielsweise als ein Gleichspannungssignal, als ein Stromsignal oder als ein Frequenzsignal ausgebildet. Die Messeinrichtung 7 kann beispielsweise als ein HF-Detektor ausgebildet sein, welcher dazu eingerichtet ist, den Leistungspegel des HF-Signals HF an der Koppelstelle K in ein proportionales Gleichspannungssignal zu wandeln.

Das Auswertemittel 8 ist dazu eingerichtet, ein Testergebnis E mittels eines Vergleiches zwischen dem bereitgestellten Messsignal MS und einem von dem Leistungspegel des eingespeisten HF-Signals HF abhängigen Sollsignal SS bereitzustellen.

Weiter weist die Steuervorrichtung 4 vorzugsweise ein Fehlerdetektionsmittel 18 auf. Das Fehlerdetektionsmittel 18 ist dazu eingerichtet, einen Fehler F auf der Übertragungsstrecke 2 in Abhängigkeit des von dem Auswertemittel 8 bereitgestellten Testergebnisses E zu detektieren.

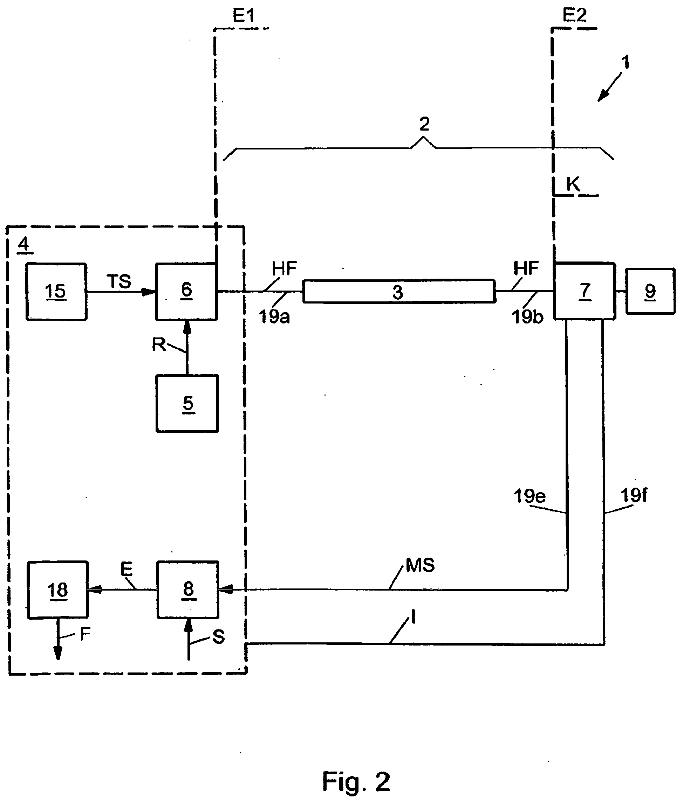

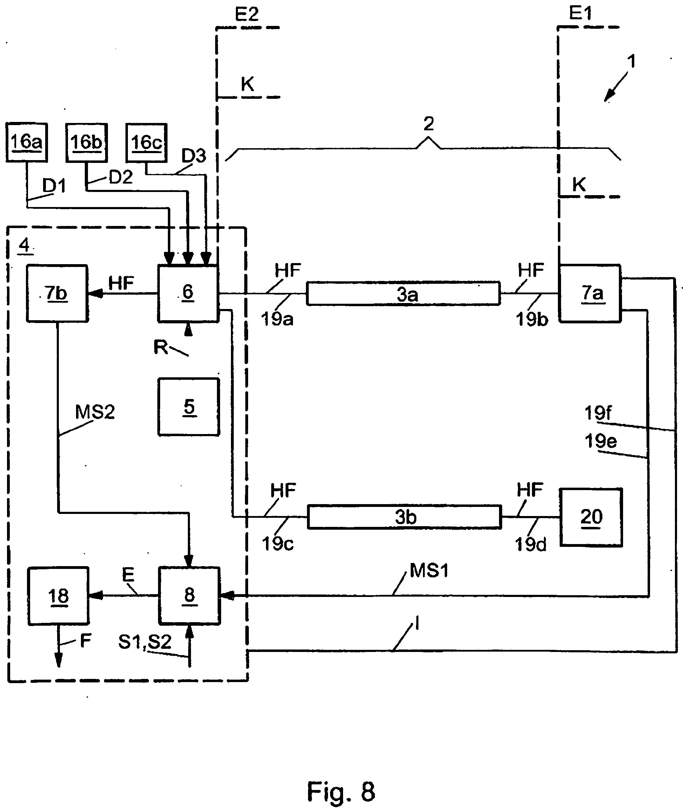

Die weiteren Ausführungsbeispiele der Testvorrichtung 1 nach den Figuren 2 und 8 weisen sämtliche Merkmale des ersten Ausführungsbeispiels der Testvorrichtung 1 nach Fig. 1 auf. Hinsichtlich der Merkmale in den Figuren 2 und 8, die auch in Fig. 1 gezeigt sind, wird zur Vermeidung von Wiederholungen hiermit auf Fig. 1 Bezug genommen.

Fig. 2 zeigt ein zweites Ausführungsbeispiel der Testvorrichtung 1 gemäß der Erfindung. Das zweite Ausführungsbeispiel der Testvorrichtung 1 nach Fig. 2 unterscheidet sich von dem ersten Ausführungsbeispiel nach Fig. 1 mitunter dahingehend, dass die Messeinrichtung 7 mit einem Abschlusswiderstand 9 zur HF-Terminierung gekoppelt ist und nicht wie nach Fig. 1 einen solchen Abschlusswiderstand 9 integriert.

Weiter mit Bezug auf Fig. 2 hat die Übertragungsstrecke 2 ein erstes Ende E1 und ein zweites Ende E2. Die Leckleitungsantenne 3 ist vorzugsweise zwischen dem ersten Ende E1 und dem zweiten Ende E2 gekoppelt. Die Steuervorrichtung 4 ist mit dem ersten Ende E2 gekoppelt und das Auswertemittel 8 ist mit dem zweiten Ende E2 gekoppelt.

Weiter weist die Steuervorrichtung 4 ein Triggermittel 15 auf, welches dazu eingerichtet ist, die Durchführung des Funktionstests mittels eines Triggersignals TS zu triggern.

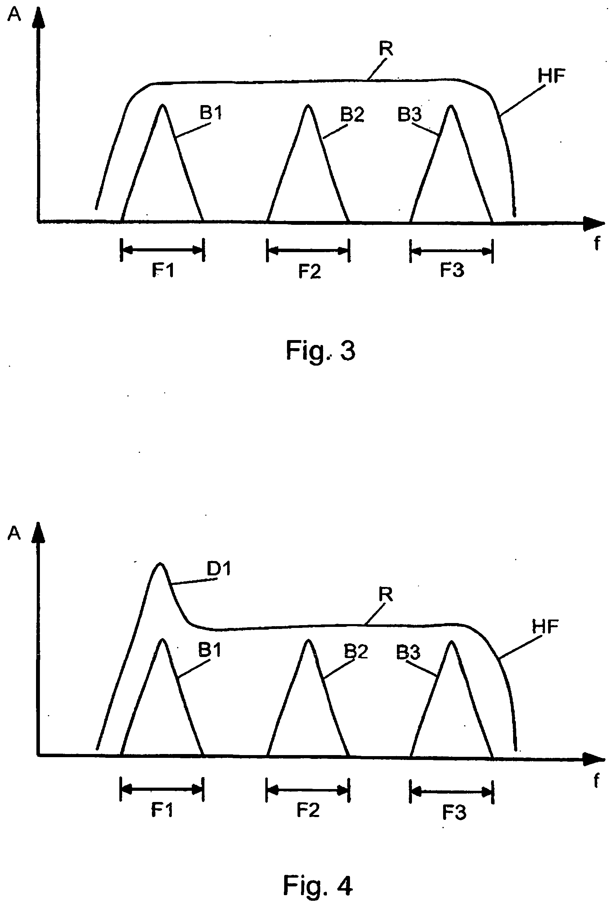

Fig. 3 zeigt ein schematisches Amplituden-Frequenz-Diagramm mit einem ersten Ausführungsbeispiel des HF-Signals HF gemäß der Erfindung und drei terrestrischen Basisstationssignalen B1-B3. In analoger Weise zeigt Fig. 4 ein schematisches Amplituden-Frequenz-Diagramm mit einem zweiten Ausführungsbeispiel des HF-Signals HF gemäß der Erfindung und den drei terrestrischen Basisstationssignalen B1-B3. Gemäß Fig. 3 entspricht das HF-Signal HF dem bereitgestellten Rauschsignal R. Im Gegensatz dazu umfasst das HF-Signal gemäß Fig. 4 das Rauschsignal R und ein darüber gelagertes Dienstsignal D1.

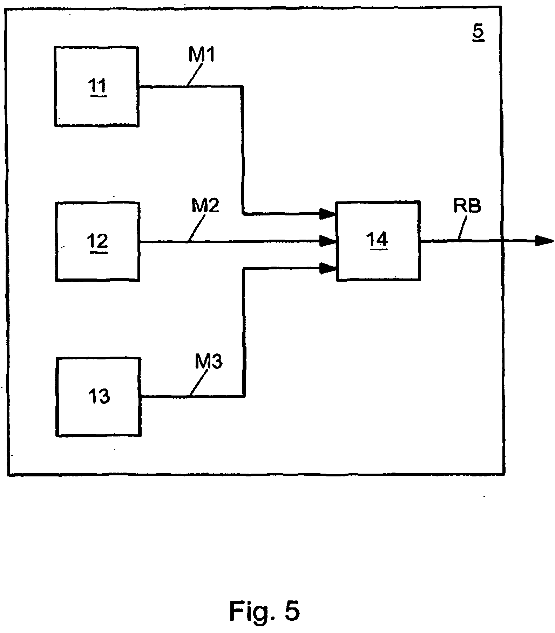

Zur Bereitstellung eines bandbegrenzten Rauschsignals RB als Rauschsignal R kann die Generierungseinrichtung 5 eine Anzahl von Rauschgeneratoren 11-13 aufweisen. Ein Ausführungsbeispiel einer solchen Generierungseinrichtung 5 mit einer Anzahl von Rauschgeneratoren 11-13 zeigt Fig. 5. Die Generierungseinrichtung 5 gemäß Fig. 5 hat ohne Einschränkung der Allgemeinheit drei Rauschgeneratoren 11-13. Der jeweilige Rauschgenerator 11-13 ist dazu geeignet, ein jeweiliges, auf ein vorbestimmtes Frequenzband F1-F3 begrenztes Rauschsignal M1-M3 bereitzustellen (siehe Fig. 6).

Weiter zeigt Fig. 5, dass die Generierungseinrichtung 5 mit einem Auswahlmittel 14 ausgestattet werden kann, welches dazu geeignet ist, zumindest einen oder mehrere der Anzahl der Rauschgeneratoren 11-13 zum Bereitstellen eines bandbegrenzten Rauschsignals RB für das HF-Signal HF auszuwählen. Das Auswahlmittel 14 wählt beispielsweise den ersten Rauschgenerator 11 aus, so dass das bandbegrenzte Rauschsignal RB dem ersten Maskierungssignal M1 entspricht (siehe Figuren 6 und 7, wonach das erste Maskierungssignal M1 dem bandbegrenzten Rauschsignal RB entspricht).

Mit Bezug auf Fig. 7 ist das jeweilige Frequenzband F1-F3 des bandbegrenzten Rauschsignals RB vorzugsweise auf zumindest ein entsprechendes vorbestimmtes Frequenzband F1-F3 eines jeweiligen terrestrischen Basisstationssignals B1-B3 einer Basisstation eingestellt.

Folglich kann das Triggermittel 15 dazu eingerichtet werden, eine Mehrzahl der Funktiontests mit unterschiedlich ausgewählten bandbegrenzten Rauschsignalen RB seriell auszuführen. In einem solchen Fall kann das Auswertemittel 8 dazu eingerichtet werden, einen Testergebnis-Vektor E in Abhängigkeit der Mehrzahl der seriell durchgeführten Funktionstest des Kommunikationssystems bereitzustellen. Weiterhin kann das Fehlerdetektionsmittel 18 dazu eingerichtet werden, einen Fehler F eines oder mehrerer Rauschgeneratoren 11-13 und/oder einen Fehler F auf der Übertragungsstrecke 2 in Abhängigkeit des bereitgestellten Testergebnis-Vektors E zu detektieren.

Vor der seriellen Durchführung der Funktionstests mit den verschiedenen bandbegrenzten Rauschsignalen RB wird die Messeinrichtung 7 vorzugsweise in einen Testmode gebracht, das heißt die Einkoppeldämpfung wird in geeigneter Weise minimal geschaltet, um den Leistungspegel des HF-Signals HF so niedrig einstellen zu können, dass die Abstrahlung der Signale über die Leckleitungsantenne 3 insbesondere außerhalb der Flugzeugkabine unter dem jeweiligen behördlich vorgeschriebenen Grenzwert liegt (zum Beispiel -36dBm < 1GHz bzw. -30dBm > 1 GHz). Folglich entfällt die Notwendigkeit der Beantragung einer behördlichen Genehmigung für die Verwendung der Testfrequenzen für den Nutzer der Testvorrichtung 1.

Fig. 8 zeigt ein schematisches Blockschaltbild eines dritten Ausführungsbeispiels der Testvorrichtung 1 gemäß der Erfindung. Gemäß dem dritten Ausführungsbeispiel nach Fig. 8 weist die Übertragungsstrecke 2 eine längsseitig in die Flugzeugkabine angeordnete Sende-Leckleitungsantenne 3a und eine längsseitig in der Flugzeugkabine angeordnete Empfangs-Leckleitungsantenne 3b auf.

Die Sende-Leckleitungsantenne 3a und die Empfangs-Leckleitungsantenne 3b sind vorzugsweise parallel in der Flugzeugkabine angeordnet und sind jeweils zwischen dem ersten Ende E1 und dem zweiten Ende E2 der Übertragungsstrecke 2 gekoppelt.

Weiter hat die Testvorrichtung 10 vorzugsweise eine Mehrzahl von Messeinrichtungen 7a, 7b. Beispielsweise ist eine erste Messeinrichtung 7a an dem zweiten Ende E2 der Übertragungsstrecke 2 mit der Sende-Leckleitungsantenne 3a gekoppelt und eine zweite Messeinrichtung 7b ist an dem ersten Ende E1 der Übertragungsstrecke 2 mit der Empfangs-Leckleitungsantenne 3b gekoppelt.

Die jeweilige Messeinrichtung 7a, 7b misst den Leistungspegel des HF-Signals HF an der jeweiligen Koppelstelle K und stellt abhängig davon ein zu dem jeweiligen gemessenen Leistungspegel proportionales Messsignal MS1, MS2 bereit. Folglich wird dem Auswertemittel 8 ein von dem Leistungspegel des eingespeisten HF-Signals HF abhängiges erstes Sollsignal SS1 für das erste Messsignal MS1 und ein zweites Sollsignal SS2 für das zweite Messsignal MS2 bereitgestellt.

Weiter ist zumindest eine Sende-/Empfangseinrichtung 16a - 16c vorgesehen. Die jeweilige Sende-/Empfangseinrichtung 16a-16c ist dazu eingerichtet, ein Dienstsignal D1-D3 zur Bereitstellung eines vorbestimmten Dienstes, wie GSM, UMTS, WLAN und dergleichen, und zur Übertragung über die Übertragungsstrecke 2 bereitzustellen.

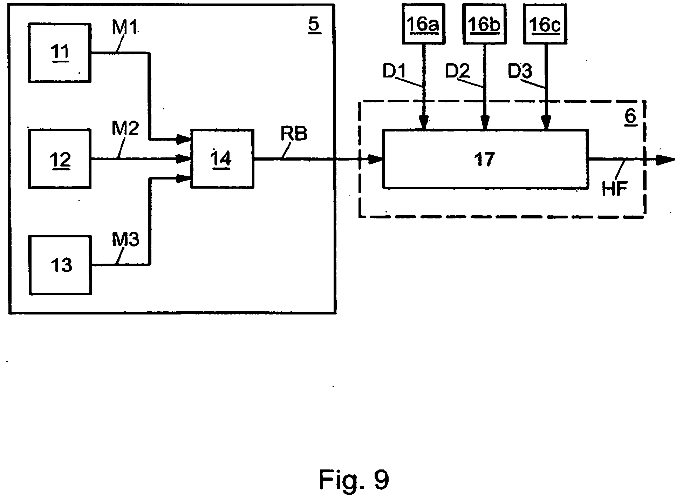

Zur Kombinierung der verschiedenen Dienstsignale D1-D3 für die einzelnen Dienste und des Rauschsignals R bzw. des bandbegrenzten Rauschsignal RB weist die Übertragungseinrichtung 6 vorzugsweise eine Kombiniereinrichtung auf. Die Kombiniereinrichtung 17 ist detailliert mit Bezug auf Fig. 9 beschrieben. Dazu zeigt Fig. 9 ein schematisches Blockschaltbild eines Ausführungsbeispiels einer Generierungseinrichtung 5 und einer Übertragungseinrichtung 6. Die Generierungseinrichtung 5 ist gemäß Fig. 5 aufgebaut und stellt ein bandbegrenztes Rauschsignal RB bereit. Die drei Sende-Empfangseinrichtungen 16a-16c stellen verschiedene Dienstsignale D1-D3 bereit.

In Abhängigkeit von einer vom Nutzer der Testvorrichtung 1 vorgegebenen Vorgabe (nicht gezeigt) kombiniert die Kombiniereinrichtung 17 das bereitgestellte breitbandige Rauschsignal RB und das zumindest eine Dienstsignal D1-D3 zur Ausbildung des auf die Übertragungsstrecke 2 einzuspeisenden HF-Signals HF.

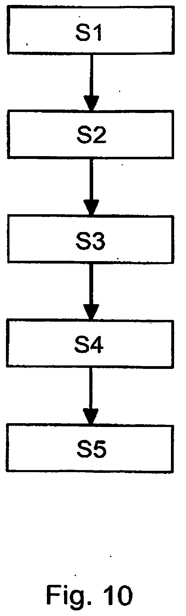

In Fig. 10 ist ein schematisches Ablaufdiagramm eines Ausführungsbeispiels eines erfindungsgemäßen Verfahrens zum Durchführen eines Funktionstests eines Kommunikationssystems in einer Flugzeugkabine eines Flugzeuges dargestellt.

Nachfolgend wird das erfindungsgemäße Verfahren anhand des Blockschaltbildes in Fig. 10 mit Bezug auf die Blockschaltbilder der Figuren 1 bis 9 erläutert. Das erfindungsgemäße Verfahren gemäß Fig. 10 weist die Verfahrensschritte S1 bis S5 auf:

Verfahrensschritt S1

Ein breitbandiges Rauschsignal R wird generiert und bereitgestellt.

Verfahrensschritt S2:

In eine Übertragungsstrecke 2 wird ein HF-Signal HF eingespeist. Die Übertragungsstrecke 2 hat zumindest eine in der Flugzeugkabine angeordnete Leckleitungsantenne 3. Das in die Leckleitungsantenne 3 eingespeiste HF-Signal HF weist einen einstellbaren Leistungspegel auf und umfasst zumindest das generierte breitbandige Rauschsignal R.

Verfahrensschritt S3:

Der Leistungspegel des HF-Signals HF wird an einer vorbestimmten Koppelstelle K der Übertragungsstrecke 2 gemessen.

Verfahrensschritt S4:

Ein zu dem gemessenen Leistungspegel proportionales Messsignal MS wird bereitgestellt.

Verfahrensschritt S5:

Ein Testergebnis E wird mittels eines Vergleichs zwischen dem bereitgestellten Messsignal MS und einem von dem Leistungspegel des eingespeisten HF-Signals (HF) abhängigen Sollsignal SS berechnet und bereitgestellt.

**Bezugszeichenliste**

| | |
|---|---|
| 1 | Testvorrichtung |
| 2 | Übertragungsstrecke |
| 3 | Leckleitungsantenne |
| 3a | Sende-Leckleitungsantenne |
| 3b | Empfangs-Leckleitungsantenne |
| 4 | Steuervorrichtung |
| 5 | Generierungseinrichtung |
| 6 | Übertragungseinrichtung |
| 7,7a,7b | Messeinrichtung |
| 8 | Auswertemittel |
| 9 | Abschlusswiderstand |
| 11-13 | Rauschgenerator |
| 14 | Auswahlmittel |
| 15 | Triggermittel |
| 16a-16c | Sende-/Empfangseinrichtung |
| 17 | Kombiniereinrichtung |
| 18 | Fehlerdetektionsmittel |
| 19a-19e | Leitung |
| 20 | Last |
| A | Leistungspegel |
| D1-D3 | Dienstsignal |
| E | Testergebnis, Testergebnis-Vektor |
| F | Fehler |
| F1-F3 | Frequenzband |
| HF | HF-Signal |
| I | Strom |
| MS,MS1,MS2 | Messsignal |
| R | Rauschsignal |
| RB | bandbegrenztes Rauschsignal |
| SS1,SS2,SS3 | Sollsignal |
| S1-S5 | Verfahrensschritt |
| TS | Triggersignal |

**Patentansprüche**

1. Testvorrichtung (1) zur Durchführung eines Funktionstests eines Kommunikationssystems in einer Flugzeugkabine eines Flugzeuges, mit:

- einer Übertragungsstrecke (2), welche zumindest eine in der Flugzeugkabine angeordnete Leckleitungsantenne (3) aufweist;

- einer mit der Übertragungsstrecke (2) gekoppelten Steuervorrichtung (4), welche eine Generierungseinrichtung (5) zum Generieren eines breitbandigen Rauschsignals (R) und eine Übertragungseinrichtung (6) zum Einspeisen eines HF-Signals (HF) auf die Leckleitungsantenne (3) aufweist, wobei das eingespeiste HF-Signal (HF) einen vorbestimmten Leistungspegel hat und zumindest das generierte breitbandige Rauschsignal (R) enthält;

- zumindest einer an einer vorbestimmten Koppelstelle (K) am Ende der Übertragungsstrecke (2) mit der Übertragungsstrecke (2) gekoppelten Messeinrichtung (7) zum Messen des Leistungspegels des HF-Signals (HF) an der Koppelstelle (K) und zum Bereitstellen eines zu dem gemessenen Leistungspegel proportionalen Messsignals (MS); und

- einem Auswertemittel (8) zum Bereitstellen eines Testergebnisses (E) mittels eines Vergleiches zwischen dem bereitgestellten Messsignal (MS) und einem von dem Leistungspegel des eingespeisten HF-Signals (HF) abhängigen Sollsignal (SS);

wobei die Messeinrichtung (7) in einen Testmodus gebracht wird, in dem eine Einkoppeldämpfung minimal geschaltet wird, um den Leistungspegel des HF-Signals (HF) derart niedrig einstellen zu können, dass die Abstrahlung des Signals über die Leckleitungsantenne (3) außerhalb der Flugkabine unter einem vorgegebenen Grenzwert liegt und Dienste außerhalb des Flugzeuges nicht gestört werden.

2. Testvorrichtung nach Anspruch 1,
**dadurch gekennzeichnet,**
**dass** das bereitgestellte Rauschsignal (R) breitbandig gegenüber einer Kohärenzbandbreite der Übertragungsstrecke (2) ist.

3. Testvorrichtung nach Anspruch 2,
**dadurch gekennzeichnet,**
**dass** das bereitgestellte breitbandige Rauschsignal (R) zumindest ein Maskierungssignal (M1-M3) beinhaltet, wobei das jeweilige Maskierungssignal (M1-M3) zum Maskieren eines jeweiligen terrestrischen Basisstationsignals (B1-B3), welches ein jeweiliges vorbestimmtes Frequenzband (F1-F3) nutzt, geeignet ist.

4. Testvorrichtung nach Anspruch 1, 2 oder 3,
**dadurch gekennzeichnet,**
**dass** die Messeinrichtung (7) eine HF-Terminierung hat.

5. Testvorrichtung nach Anspruch 1 oder einem der Ansprüche 2 bis 4,
**dadurch gekennzeichnet,**
**dass** die Übertragungsstrecke (2) ein erstes Ende (E1) und ein zweites Ende (E2) hat,
wobei die Leckleitungsantenne (3) zwischen dem ersten Ende (E1) und dem zweiten Ende (E2) gekoppelt ist,
wobei die Steuervorrichtung (4) mit dem ersten Ende (E1) gekoppelt ist und/oder
das Auswertemittel (8) mit dem ersten Ende (E1) oder dem zweiten Ende (E2) gekoppelt ist.

6. Testvorrichtung nach Anspruch 1 oder einem der Ansprüche 2 bis 5,
**dadurch gekennzeichnet,**
**dass** die Generierungseinrichtung (5) eine Anzahl von Rauschgeneratoren (11-13) aufweist, wobei der jeweilige Rauschgenerator (11-13) dazu geeignet ist, ein jeweiliges auf ein vorbestimmtes Frequenzband (F1-F3) begrenztes Rauschsignal (M1-M3) bereitzustellen.

7. Testvorrichtung nach Anspruch 1 oder einem der Ansprüche 2 bis 6,
**dadurch gekennzeichnet,**
**dass** die Steuereinrichtung (4) ein Auswahlmittel (14) aufweist, welches dazu geeignet ist, zumindest einen der Anzahl der Rauschgeneratoren (11-13) zum Bereitstellen eines bandbegrenzten Rauschsignals (RB) für das HF-Signal (HF) auszuwählen.

8. Testvorrichtung nach Anspruch 7,
**dadurch gekennzeichnet,**
**dass** die Steuervorrichtung (4) ein Triggermittel (15) aufweist, welches dazu eingerichtet ist, die Durchführung des Funktionstests mit dem ausgewählten bandbegrenzten Rauschsignal (RB) zu triggern.

9. Testvorrichtung nach Anspruch 8,

**dadurch gekennzeichnet,**

**dass** das Triggermittel (15) dazu eingerichtet ist, eine Mehrzahl der Funktionstests mit unterschiedlichen ausgewählten bandbegrenzten Rauschsignalen (RB) seriell auszuführen.

10. Testvorrichtung nach Anspruch 1 oder einem der Ansprüche 2 bis 9,
**dadurch gekennzeichnet,**
**dass** die Messeinrichtung (7) einen HF-Detektor aufweist, welcher dazu geeignet ist, den Leistungspegel des HF-Signals (HF) an der Koppelstelle (K) in ein proportionales Gleichspannungssignal zu wandeln.

11. Testvorrichtung nach Anspruch 1 oder einem der Ansprüche 2 bis 10,
**dadurch gekennzeichnet,**
**dass** die Übertragungsstrecke (2) eine längsseitig in der Flugzeugkabine angeordnete Sende-Leckleitungsantenne (3a) und eine längsseitig in der Flugzeugkabine angeordnete Empfangs-Leckleitungsantenne (3b) aufweist.

12. Testvorrichtung nach Anspruch 5 oder einem der Ansprüche 6 bis 11,
**dadurch gekennzeichnet,**
**dass** eine Mehrzahl von Messeinrichtungen (7a, 7b) vorgesehen ist, wobei eine erste Messeinrichtung (7a) an dem zweiten Ende (E2) der Übertragungsstrecke (2) mit der Sende-Leckleitungsantenne (3a) gekoppelt ist und eine zweite Messeinrichtung (7b) an dem ersten Ende (E1) der Übertragungsstrecke (2) mit der Empfangs-Leckleitungsantenne (3b) gekoppelt ist.

13. Testvorrichtung nach Anspruch 1 oder einem der Ansprüche 2 bis 12,
**dadurch gekennzeichnet,**
**dass** zumindest eine Sende-/Empfangseinrichtung (16a-16c) vorgesehen ist, wobei die jeweilige Sende-/Empfangseinrichtung (16a-16c) dazu geeignet ist, ein Dienstsignal (D1-D3) zur Bereitstellung eines vorbestimmten Dienstes und zur Übertragung über die Übertragungsstrecke (2) bereitzustellen.

14. Testvorrichtung nach Anspruch 9,
**dadurch gekennzeichnet,**
**dass** das Auswertemittel (8) dazu eingerichtet ist, einen Testergebnis-Vektor (E) in Abhängigkeit der Mehrzahl der seriell durchgeführten Funktionstests des Kommunikationssystems bereitzustellen.

15. Testvorrichtung nach Anspruch 14,
**dadurch gekennzeichnet,**
**dass** ein Fehlerdetektionsmittel (18) vorgesehen ist, welches dazu geeignet ist, einen Fehler (F) eines oder mehrerer Rauschgeneratoren (11-13) und/oder einen Fehler (F) auf der Übertragungsstrecke (2) in Abhängigkeit des bereitgestellten Testergebnis-Vektors (E) zu detektieren.

16. Verfahren zum Durchführen eines Funktionstests eines Kommunikationssystems in einer Flugzeugkabine eines Flugzeuges, mit den Schritten:

- Generieren eines breitbandigen Rauschsignals (R);
- Einspeisen eines HF-Signals (HF) in eine Übertragungsstrecke (2), welche zumindest eine in der Flugzeugkabine angeordnete Leckleitungsantenne (3) aufweist, wobei das eingespeiste HF-Signal (HF) einen vorbestimmten Leistungspegel hat und zumindest das generierte breitbandige Rauschsignal (R) enthält;
- Messen des Leistungspegels des HF-Signals (HF) durch eine Messeinrichtung (7) an einer Koppelstelle (K) der Übertragungsstrecke (2), wobei die Koppelstelle (K) am Ende der Übertragungsstrecke (2) ist;
- Bereitstellen eines zu dem gemessenen Leistungspegel proportionalen Messsignals (MS); und
- Bereitstellen eines Testergebnisses (E) mittels eines Vergleichs zwischen dem bereitgestellten Messsignal (MS) und einem von dem Leistungspegel des eingespeisten HF-Signals (HF) abhängigen Sollsignals (SS);
- wobei die Messeinrichtung (7) in einen Testmodus gebracht wird, in dem eine Einkoppeldämpfung minimal geschaltet wird, um den Leistungspegel des HF-Signals derart niedrig einstellen zu können, dass die Abstrahlung der Signale über die Leckleitungsantenne (3) außerhalb der Flugkabine unterhalb eines vorgegebenen Grenzwertes liegt, so dass Dienste außerhalb des Flugzeuges nicht gestört werden.

**Claims**

1.  Test device (1) for carrying out a functional test of a communication system in an aircraft cabin of an aircraft, comprising:

    - a transmission path (2) which comprises at least one leaky line antenna (3) arranged in the aircraft cabin;
    - a control device (4) which is coupled to the transmission path (2) and comprises a generating unit (5) for generating a broadband noise signal (R) and a transmission unit (6) for feeding an HF signal (HF) to the leaky line antenna (3), the fed HF signal (HF) having a predetermined power level and containing at least the generated broadband noise signal (R);
    - at least one measuring unit (7), which is coupled to the transmission path (2) at a predetermined coupling point (K) at the end of the transmission path (2), for measuring the power level of the HF signal (HF) at the coupling point (K) and for providing a measurement signal (MS) which is proportional to the measured power level; and
    - an evaluation means (8) for providing a test result (E) by comparing the provided measurement signal (MS) and a setpoint signal (SS) which is dependent on the power level of the fed HF signal (HF);

    wherein the measuring unit (7) is placed in a test mode in which a coupling loss is switched to be minimal in order to be able to set the power level of the HF signal (HF) to be so low that the radiation of the signal via the leaky line antenna (3) lies below a predetermined threshold outside the aircraft cabin and services outside the aircraft are not disturbed.

2.  Test device as claimed in claim 1, **characterised in that** the provided noise signal (R) is broadband compared with a coherence bandwidth of the transmission path (2).

3.  Test device as claimed in claim 2, **characterised in that** the provided broadband noise signal (R) contains at least one masking signal (M1-M3), the respective masking signal (M1-M3) being suitable to mask a respective terrestrial base station signal (B1-B3) which uses a respective predetermined frequency band (F1-F3).

4.  Test device as claimed in claim 1, 2 or 3, **characterised in that** the measuring unit (7) has an HF termination.

5.  Test device as claimed in claim 1 or any one of claims 2 to 4, **characterised in that** the transmission path (2) has a first end (E1) and a second end (E2),
    wherein the leaky line antenna (3) is coupled between the first end (E1) and the second end (E2),
    wherein the control device (4) is coupled to the first end (E1) and/or
    the evaluation means (8) is coupled to the first end (E1) or to the second end (E2).

6.  Test device as claimed in claim 1 or any one of claims 2 to 5, **characterised in that** the generating unit (5) comprises a number of noise generators (11-13), the respective noise generator (11-13) being suitable to provide a respective noise signal (M1-M3) which is limited to a predetermined frequency band (F1-F3).

7.  Test device as claimed in claim 1 or any one of claims 2 to 6, **characterised in that** the control unit (4) comprises a selection means (14) which is suitable to select at least one of the number of noise generators (11-13) for providing a band-limited noise signal (RB) for the HF signal (HF).

8.  Test device as claimed in claim 7, **characterised in that** the control device (4) comprises a trigger means (15) which is configured to trigger implementation of the functional test with the selected band-limited noise signal (RB).

9.  Test device as claimed in claim 8, **characterised in that** the trigger means (15) is configured to carry out in series a plurality of functional tests with different, selected band-limited noise signals (RB).

10. Test device as claimed in claim 1 or any one of claims 2 to 9, **characterised in that** the measuring device (7) has an HF detector which is suitable to convert the power level of the HF signal (HF) at the coupling point (K) into a proportional direct voltage signal.

11. Test device as claimed in claim 1 or any one of claims 2 to 10, **characterised in that** the transmission path (2) comprises a transmitting leaky line antenna (3a) arranged longitudinally in the aircraft cabin, and a receiving leaky line antenna (3b) arranged longitudinally in the aircraft cabin.

**12.** Test device as claimed in claim 5 or any one of claims 6 to 11, **characterised in that** a plurality of measuring units (7a, 7b) are provided, a first measuring unit (7a) being coupled to the transmitting leaky line antenna (3a) at the second end (E2) of the transmission path (2), and a second measuring unit (7b) being coupled to the receiving leaky line antenna (3b) at the first end (E1) of the transmission path (2).

**13.** Test device as claimed in claim 1 or any one of claims 2 to 12, **characterised in that** at least one transmitting/receiving unit (16a-16c) is provided, the respective transmitting/receiving unit (16a-16c) being suitable to provide a service signal (D1-D3) for provision of a predetermined service and for transmission over the transmission path (2).

**14.** Test device as claimed in claim 9, **characterised in that** the evaluation means (8) is configured to provide a test result vector (E) as a function of the plurality of the functional tests of the communication system carried out in series.

**15.** Test device as claimed in claim 14, **characterised in that** an error detection means (18) is provided which is suitable to detect an error (F) of one or more noise generators (11-13) and/or an error (F) on the transmission path (2) as a function of the provided test result vector (E).

**16.** Method for carrying out a functional test of a communication system in an aircraft cabin of an aircraft, comprising the steps of:

- generating a broadband noise signal (R);
- feeding an HF signal (HF) into a transmission path (2) which comprises at least one leaky line antenna (3) arranged in the aircraft cabin, the fed HF signal (HF) having a predetermined power level and containing at least the generated broadband noise signal (R);
- measuring the power level of the HF signal (HF) by means of a measuring unit (7) at a coupling point (K) of the transmission path (2), the coupling point (K) being at the end of the transmission path (2);
- providing a measurement signal (MS) which is proportional to the measured power level; and
- providing a test result (E) by comparing the provided measurement signal (MS) and a setpoint signal (SS) which is dependent on the power level of the fed HF signal (HF);

wherein the measuring unit (7) is placed in a test mode in which a coupling loss is switched to be minimal in order to be able to set the power level of the HF signal to be so low that the radiation of the signals via the leaky line antenna (3) lies below a predetermined threshold outside the aircraft cabin so that services outside the aircraft are not disturbed.

## Revendications

**1.** Dispositif d'essai (1) pour réaliser un essai fonctionnel d'un système de communication dans une cabine d'aéronef, comportant:

- une ligne de transmission (2), qui comprend au moins une antenne à conduite de retour (3) disposée dans la cabine d'aéronef ;
- un dispositif de commande (4) couplé à la ligne de transmission (2), qui présente un moyen de génération (5) destiné à générer un signal de bruit (R) à large bande et un moyen de transmission (6) destiné à injecter un signal HF (HF) à l'antenne à conduite de retour (3), le signal HF (HF) injecté ayant un niveau d'intensité prédéterminé et comprenant au moins le signal de bruit (R) à large bande généré,
- au moins un moyen de mesure (7) couplé à la ligne de transmission (2) au niveau d'un point de couplage (K) prédéterminé à l'extrémité de la ligne de transmission (2) destiné à mesurer le niveau d'intensité du signal HF (HF) au niveau du point de couplage (K) et destiné à fournir un signal de mesure (MS) proportionnel au niveau d'intensité du signal mesuré ; et
- un moyen d'analyse (8) destiné à fournir un résultat de l'essai (E) par l'intermédiaire d'une comparaison entre le signal de mesure (MS) fourni et un signal de consigne (SS) dépendant du niveau d'intensité du signal HF (HF) injecté ;

dans lequel le moyen de mesure (7) est amené dans un mode test, dans lequel un amortissement de couplage est commuté au minimum pour pouvoir régler le niveau d'intensité du signal HF (HF) de manière à être si faible que l'émission du signal par l'intermédiaire de l'antenne à conduite de retour (3) à l'extérieur de la cabine d'aéronef se situe en deçà d'une valeur limite prédéfinie et que des services à l'extérieur de l'aéronef ne sont pas perturbés.

**2.** Dispositif d'essai selon la revendication 1, **caractérisé en ce que** le signal de bruit (R) fourni est à large bande par rapport à une largeur de bande de cohérence de la ligne de transmission (2).

**3.** Dispositif d'essai selon la revendication 2, **caractérisé en ce que** le signal de bruit (R) à large bande fourni comprend au moins un signal de masquage (M1 à M3), le signal de masquage respectif (M1 à M3) étant adapté à masquer un signal de station de base (B1 à B3) terrestre respectif qui utilise une bande de fréquence (F1 à F3) respective prédéterminée.

**4.** Dispositif d'essai selon la revendication 1, 2 ou 3, **caractérisé en ce que** le moyen de mesure (7) a une terminaison HF.

**5.** Dispositif d'essai selon la revendication 1 ou l'une des revendications 2 à 4, **caractérisé en ce que** la ligne de transmission (2) a une première extrémité (E1) et une seconde extrémité (E2),
dans lequel l'antenne à conduite de retour (3) est couplée entre la première extrémité (E1) et la seconde extrémité (E2),
dans lequel le dispositif de commande (4) est couplé à la première extrémité (E1) et/ou
dans lequel le moyen d'analyse (8) est couplé à la première extrémité (E1) ou à la seconde extrémité (E2),

**6.** Dispositif d'essai selon la revendication 1 ou l'une des revendications 2 à 5, **caractérisé en ce que** le moyen de génération (5) présente un nombre de générateurs de bruit (11 à 13), le générateur de bruit (11 à 13) respectif étant adapté pour fournir un signal de bruit (M1 à M3) respectif limité à une bande de fréquence (F1 à F3) prédéterminée.

**7.** Dispositif d'essai selon la revendication 1 ou l'une des revendications 2 à 6, **caractérisé en ce que** le moyen de commande (4) présente un moyen de sélection (14) qui est adapté pour sélectionner au moins un du nombre de générateurs de bruit (11 à 13) pour fournir un signal de bruit (RB) à largeur de bande limitée pour le signal HF (HF).

**8.** Dispositif d'essai selon la revendication 7, **caractérisé en ce que** le moyen de commande (4) présente un moyen de déclenchement (15) qui est conçu pour déclencher la réalisation du test fonctionnel avec le signal de bruit (RB) à largeur de bande limitée sélectionné.

**9.** Dispositif d'essai selon la revendication 8, **caractérisé en ce que** le moyen de déclenchement (15) est conçu pour réaliser en série une pluralité des tests fonctionnels avec différents signaux de bruit (RB) à largeur de bande limitée sélectionnés.

**10.** Dispositif d'essai selon la revendication 1 ou l'une des revendications 2 à 9, **caractérisé en ce que** le moyen de mesure (7) présente un détecteur HF, qui est adapté pour transformer le niveau d'intensité du signal HF (HF) au niveau du point de couplage (K) en un signal à tension continue proportionnel.

**11.** Dispositif d'essai selon la revendication 1 ou l'une des revendications 2 à 10, **caractérisé en ce que** la ligne de transmission (2) présente une antenne à conduite de retour d'émission (3a) disposée longitudinalement dans la cabine d'aéronef et une antenne à conduite de retour de réception (3b) disposée longitudinalement dans la cabine d'aéronef.

**12.** Dispositif d'essai selon la revendication 5 ou l'une des revendications 6 à 11, **caractérisé en ce qu'**une pluralité de moyens de mesure (7a, 7b) sont prévus, un premier moyen de mesure (7a) étant couplé au niveau de la seconde extrémité (E2) de la ligne de transmission (2) à l'antenne à conduite de retour d'émission (3a) et un second moyen de mesure (7b) étant couplé au niveau de la première extrémité (E1) de la ligne de transmission (2) à l'antenne à conduite de retour de réception (3b).

**13.** Dispositif d'essai selon la revendication 1 ou l'une des revendications 2 à 12, **caractérisé en ce qu'**au moins un moyen d'émission/réception (16a-16c) est prévu, le moyen d'émission/réception (16a-16c) respectif étant adapté pour fournir un signal de service (D1 à D3) pour la fourniture d'un service prédéterminé et pour la transmission par l'intermédiaire de la ligne de transmission (2).

**14.** Dispositif d'essai selon la revendication 9, **caractérisé en ce que** le moyen d'analyse (8) est conçu pour fournir un vecteur de résultat d'essai (E) en fonction de la pluralité des tests d'essai réalisés en série du système de communication.

**15.** Dispositif d'essai selon la revendication 14, **caractérisé en ce qu'**un moyen de détection d'erreur (18) est prévu, qui est adapté pour détecter une erreur (F) d'un ou de plusieurs générateurs de bruit (11-13) et/ou une erreur (F) sur la ligne de transmission (2) en fonction du vecteur de résultat d'essai (E) fourni.

**16.** Procédé pour réaliser un essai fonctionnel d'un système de communication dans une cabine d'aéronef, comportant les étapes de :

- génération d'un signal de bruit (R) à large bande ;
- injection d'un signal HF (HF) dans une ligne de transmission (2), qui comprend au moins une antenne à conduite de retour (3) disposée dans la cabine d'aéronef, le signal HF (HF) injecté ayant un niveau d'intensité prédéterminé et comprenant au moins le signal de bruit (R) à large bande généré,
- mesure du niveau d'intensité du signal HF (HF) au moyen d'un moyen de mesure (7) au niveau d'un point de couplage (K) de la ligne de transmission (2), le point de couplage (K) étant à l'extrémité de la ligne de transmission (2) ;
- fourniture d'un signal de mesure (MS) proportionnel au niveau d'intensité du signal mesuré ; et
- fourniture d'un résultat de l'essai (E) par l'intermédiaire d'une comparaison entre le signal de mesure (MS) fourni et un signal de consigne (SS) dépendant du niveau d'intensité du signal HF (HF) injecté ;

dans lequel le moyen de mesure (7) est amené dans un mode test, dans lequel un amortissement de couplage est commuté au minimum, pour pouvoir régler le niveau d'intensité du signal HF de manière à être si faible que l'émission des signaux par l'intermédiaire de l'antenne à conduite de retour (3) à l'extérieur de la cabine d'avion se situe en deçà d'une valeur limite prédéfinie, de telle sorte que des services à l'extérieur de l'aéronef ne sont pas perturbés.

1

2

4

6

HF    19a    3    HF    19b    7

R

5

19e    19f

18    E    8    MS

F    S    I

K

Fig. 1

Fig. 2

Fig. 3

Fig. 4

Fig. 5

A

M1      M2      M3

F1      F2      F3

f

Fig. 6

A

RB

B1      B2      B3

F1      F2      F3

f

Fig. 7

Fig. 8

Fig. 9

Fig. 10

**EP 2 345 184 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2005032141 A
- DE 102006036082 A
- US 6553098 B1